# EUROPEAN PATENT SPECIFICATION

(11) **EP 2 910 459 B1**
(45) Date of publication and mention of the grant of the patent: **22.07.2020**
(21) Application number: 15154101.8
(22) Date of filing: 06.02.2015
(51) Int. Cl.: B62J 17/02, B62J 23/00

(54) **Radiator shroud structure**
Kühlerummantelungsstruktur
Structure d'enveloppe de radiateur

(30) Priority: 24.02.2014 JP 2014033446
(43) Date of publication of application: 26.08.2015
(73) Proprietor: Honda Motor Co., Ltd., Tokyo 107-8556 (JP)
(72) Inventor: Matsuo, Tomoya, Saitama 351-0193 (JP); Hosoya, Kyohei, Saitama 351-0193 (JP); Ebihara, Takuya, Saitama 351-0193 (JP); Kobayashi, Masahiro, Saitama 351-0193 (JP)
(74) Representative: Beder, Jens

(56) References cited:
- EP-A1- 2 230 120
- US-A1- 2013 026 784

## Description

The present invention relates to a saddle-ride type vehicle such as a motorcycle.

A structure is publicly known in which a saddle-ride type vehicle including front forks supporting a front wheel and a radiator disposed behind the front forks is provided with shrouds covering sides of the radiator and expanding outward toward the front to efficiently take a traveling wind into the radiator and in which front ends of these shrouds are extended to the sides of the front forks and terminal end portions of the front ends are bent inward (see US-A-20130026784 and JP 3508949).

When the traveling wind taken in from the front to the inside of the shrouds passes by outer surfaces of the front forks, the traveling wind enters the inside of the shrouds with the line of flow being bent outward by the front forks. Accordingly, the traveling wind hits inner surfaces of the shrouds and becomes turbulent in some cases. When the traveling wind becomes turbulent, wind guiding efficiency deteriorates. To prevent this, the wind is desired to be guided while being regulated just behind the front forks.

However, in the conventional example in which the front ends of the shrouds simply expand outward, the angle of the inner surface in a front portion of each shroud is such an angle that the traveling wind having passed by the front forks hits the inner surface, and it is difficult to improve regulation efficiency. Moreover, although terminal portions of the front ends are generally designed to be bent inward as in the aforementioned publicly-known example, no improvement in the regulation efficiency is expected from a degree of bending in such a terminal design. In view of this, an object of the present application is to obtain a shroud structure capable of improving the wind guiding efficiency.

The invention is defined in claim 1. Advantageous embodiments of the invention are set out in dependent claims 2-5.
Fig. 1 is a right-side view of a motorcycle according to an embodiment.
Fig. 2 is an enlarged view of a portion around a shroud in Fig. 1.
Fig. 3 is a perspective view of a portion around the shroud as viewed obliquely from a front side.
Fig. 4 is a plan view of a portion around the shrouds.
Fig. 5 is a front view of radiators and shroud portions.
Fig. 6 is a cross-sectional view taken along the line 6-6 in Fig. 2.
Fig. 7 is a view for explaining operations.
Fig. 8 is a side view of the portion around the shroud in another embodiment.
Fig. 9 is a front view of the portion around the shroud in the other embodiment.

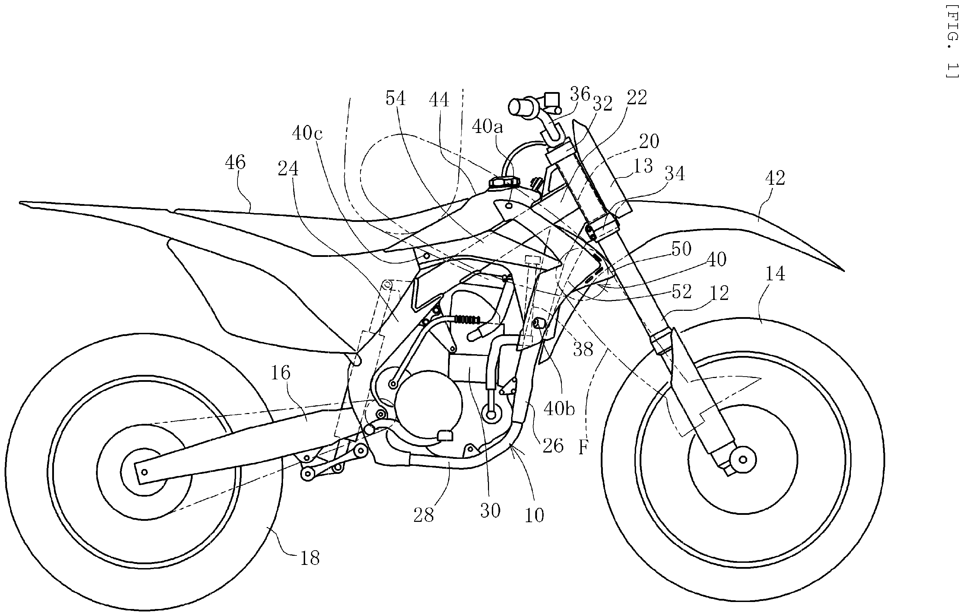

One embodiment is described below based on Figs. 1 to 7. Note that, in the present application, directions of front, rear, left, and right are based on a vehicle to which the present invention is applied, and are shown by the arrows in the drawings as necessary such that the front direction is denoted by Fr, the left direction is denoted by LH, and the right direction is denoted by RH. Moreover, regarding inner and outer sides, the inner side refers to a vehicle center side and the outer side refers to the opposite side to the vehicle center side.

Fig. 1 is a motorcycle for motocross which runs on a rough terrain, and is an example of a saddle-ride type vehicle in the present application. In the motorcycle for motocross, a rider sometimes puts his/her leg F forward to support the motorcycle while running on a rough terrain.

As shown in Fig. 1, in this vehicle, a front portion of a vehicle frame 10 supports a front wheel 14 via a pair of left and right front forks 12, and a rear portion of the vehicle frame 10 supports a rear wheel 18 via a rear arm 16. Reference numeral 13 denotes a front visor.

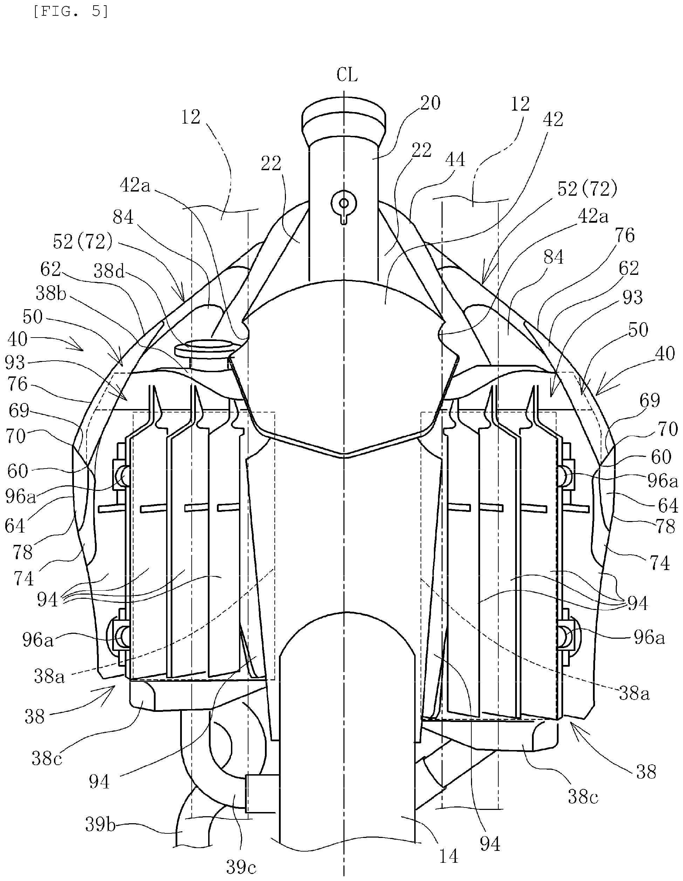

The vehicle frame 10 includes: a head pipe 20 (see Fig. 5) provided in a front end portion of the vehicle frame 10 and supporting the front forks 12; a pair of left and right main frames 22 extending obliquely downward toward the rear from the head pipe 20; a pair of left and right pivot frames 24 extending downward from rear end portions of the main frames 22; one down frame 26 extending obliquely downward from the head pipe 20 below the main frames 22; and a pair of left and right under frames 28 connecting the down frame 26 and lower ends of the pivot frames 24 to one another.

An engine 30 at a center of the vehicle is supported by the vehicle frame 10 between the front wheel 14 and the rear wheel 18. The front forks 12 are turnably supported on the head pipe 20 via a top bridge 32 and a bottom bridge 34, and are steered by using a handlebar 36.

The engine 30 is a water-cooled engine and is cooled by radiators 38 disposed on the front side of the engine 30. Sides of the radiators 38 are covered with shrouds 40. A rear portion of a front fender 42 is disposed inside front portions of the shrouds 40. The rear portion of the front fender 42 extends to the front of the radiators 38.

The shrouds 40 are members which cover the sides of the radiators 38 and which guides a wind to the radiators 38 to improve cooling efficiency. Moreover, the shrouds 40 are portions where the legs F of the rider may cross when the rider puts his/her legs F forward to support the vehicle while running, and are configured to guide the legs F in this case.

A front end portion of each of the shrouds 40 overlaps the front forks 12. An upper portion of each shroud 40 is fixed to a side surface of a fuel tank 44 with a bolt 40a, the fuel tank 44 being supported by the main frames 22 above the engine 30. A lower portion of each shroud 40 is attached to a side portion of the corresponding radiator 38 with a bolt 40b. Moreover, a rear portion of each shroud 40 extends rearward along a lower portion of the fuel tank 44 and is attached to a rear end side portion of the fuel tank 44 with a bolt 40c. A seat 46 is disposed behind the fuel tank 44.

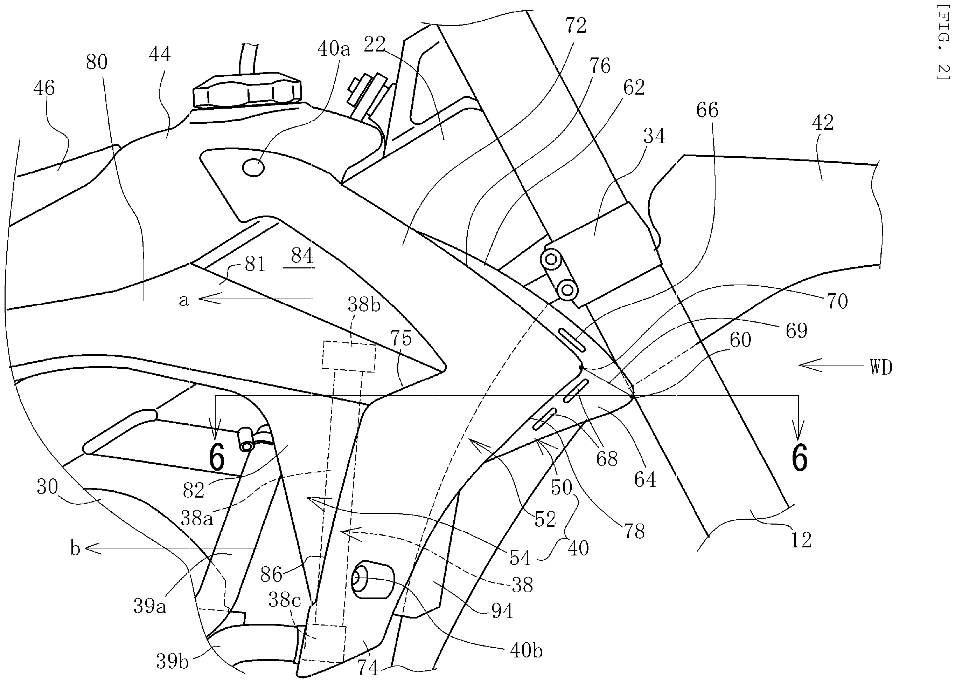

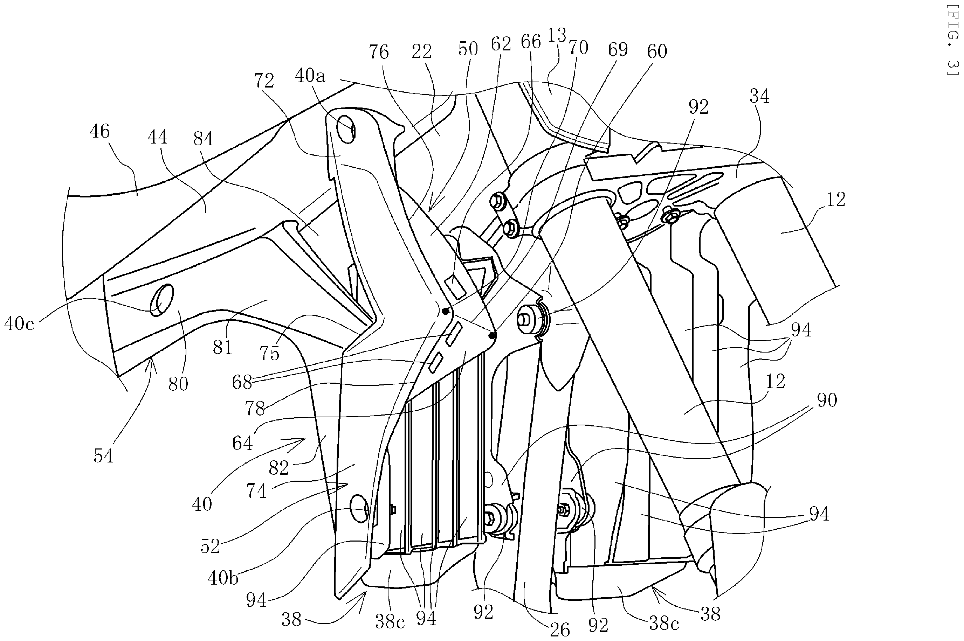

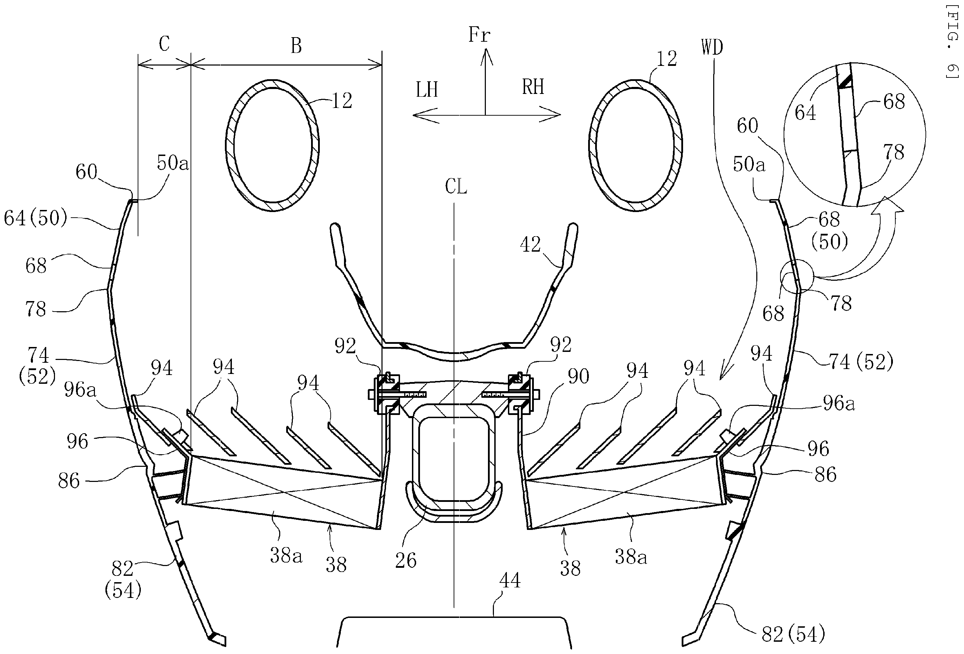

Here, the radiators 38 are described by using Figs. 2 to 6. The radiators 38 are provided respectively on left and right sides of the down frame 26. An inner portion of each of the radiators 38 is attached to a side surface of the down frame 26 via a rubber member 92 by using a bracket 90 (see Figs. 3 and 6).

The left and right radiators 38 are disposed behind the front forks 12 and the front fender 42 and are disposed in such a state that wind receiving surfaces thereof face forward and that the radiators 38 are inclined to face slightly inward (see Fig. 6).

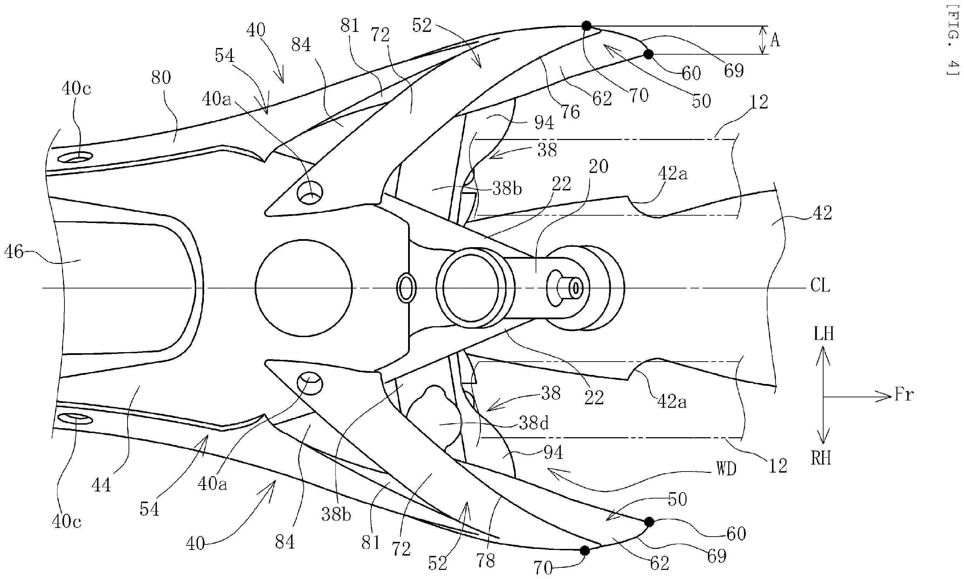

Inner portions of the front forks 12 are placed in recess portions 42a (Fig. 4) formed in the front fender 42, and the amounts of protrusion from sides of the front fender 42 are thereby reduced. The shroud 40 protruding forward is disposed outside each of the radiators 38 to guide a traveling wind WD to the radiator 38. Note that, instead of the radiators 38 provided separately on left and right sides, a radiator in which the left and right radiators are integrated may be used.

As shown in Fig. 2, each of the radiators 38 includes a radiator core 38a which is a main body portion and which forms a wind receiving surface for a cooling wind, an upper water tank 38b which is provided on an upper side of the radiator core 38a, and a lower water tank 38c which is provided on a lower side of the radiator core 38a. An inlet port is provided in the upper water tank 38b, and a cap 38d is attached to the inlet port. The upper water tank 38b is connected to a cylinder of the engine 30 by a hose 39a, and the lower water tank 38c is connected to a water pump of the engine 30 by a hose 39b. Note that reference numeral 39c in Fig. 5 denotes a hose connecting the lower water tanks 38c of the left and right radiators to each other.

A louver 93 is attached to a front face of each of the radiators 38 (see Fig. 5). The louver 93 is formed by integrating multiple fins 94. The fins 94 are inclined to extend obliquely outward and guide the traveling wind WD, guided inward along an inner surface of the shroud 40, toward the radiator core 38a (see Fig. 6). The outer fin 94 is locked to a locking portion 96a provided in a bracket 96 provided in an outer portion of the radiator 38.

Next, the shrouds 40 are described in detail by using Figs. 2 to 6, mainly based on Fig. 2. Note that Figs. 3 to 5 show a state where the front visor 13, the front forks 12, and parts associated therewith are removed.

Each of the shrouds 40 is molded from a suitable resin and integrally includes an extending portion 50, a main body front portion 52, and a main body rear portion 54. However, the extending portion 50 may be formed separately from the main body front portion 52 and then assembled thereto into one body.

A portion formed of the main body front portion 52 and the main body rear portion 54 is a main body portion corresponding to a conventional shroud portion. The main body front portion 52 and the main body rear portion 54 may be formed integrally or separately.

The extending portion 50 corresponds to a portion newly added to a front end portion of the main body portion and is a portion formed by partially bending and extending a front portion of the main body front portion 52 forward and inward (see Fig. 3). An inner surface of the extending portion 50 forms a flow-regulating surface configured to guide the traveling wind to the radiator 38, and an outer surface of the extending portion 50 forms a guide surface configured to guide the leg F of the rider. Moreover, the extending portion 50 is provided in a range of a relatively-small width in an up-down direction which is only an intermediate section of a front end portion of the main body front portion 52 in the up-down direction, and substantially has a sideways V shape in a side view.

A front-end portion 60 protruding forward is located at a front end of the radiator shroud 40 and is at substantially the same position as rear ends of the front forks 12 in a front-rear direction to laterally overlap the rear ends of the front forks 12. Note that the front-end portion 60 is located to be spaced away from the front forks 12 toward the outer side in a vehicle width direction (see Figs. 4 and 6).

The extending portion 50 extends obliquely forward and inward from the front end portion of the main body front portion 52 toward the rear ends of the front forks 12 in the side view. Note that the position of the front-end portion 60 in the side view only needs to be near the front forks 12, and the front-end portion 60 may be disposed slightly in front of the rear ends of the front forks 12 or be slightly spaced away from the rear ends of the front forks 12 to be disposed therebehind (see Figs. 4 and 6).

The extending portion 50 is a portion in the entire shroud which is frequently used to guide the leg F (see Fig. 1) put forward to support the vehicle in running, and includes an upper extending portion 62 extending obliquely upward from the front-end portion 60 toward the rear and a lower extending portion 64 extending obliquely downward from the front-end portion 60 toward the rear. Such an operation of the leg F is frequently performed particularly in a vehicle for motocross like one in the embodiment.

The upper extending portion 62 forms an inclined surface which extends inward toward the upper side in the vehicle, and a slit 66 is formed in the upper extending portion 62. Moreover, in contrast to the upper extending portion 62, the lower extending portion 64 forms an inclined surface which extends inward toward the lower side in the vehicle, and slits 68 are formed to be long in the up-down direction.

A connection portion between the upper extending portion 62 and the lower extending portion 64 forms a ridge 69 extending rearward from the front-end portion 60, and an rear end portion of the ridge 69 extends to an outermost portion 70 of the main body front portion 52. The outermost portion 70 is a portion of the shroud 40 where the amount of lateral protrusion is greatest.

The front-end portion 60 and the outermost portion 70 are located near and in front of an upper end portion of the radiator 38. Moreover, the front-end portion 60 and the outermost portion 70 are located behind and below the bottom bridge 34 at positions near the bottom bridge 34. The front-end portion 60 and portions near the front-end portion 60 overlap the front forks 12 in the side view. Furthermore, the front-end portion 60 is located in front of and below the outermost portion 70, and the ridge 69 extends obliquely downward toward the front.

The main body front portion 52 substantially has a sideways V shape in the side view which is larger than the extending portion 50, and includes an upper arm portion 72 extending obliquely upward from the outermost portion 70 toward the rear and a lower arm portion 74 extending obliquely downward from the outermost portion 70 toward the rear. The upper arm portion 72 is continuous with the upper extending portion 62 with an upper ridge 76 provided therebetween, and the lower arm portion 74 is continuous with the lower extending portion 64 with a lower ridge 78 provided therebetween.

The slit 66 has a shape elongated along the upper ridge 76 and penetrates front and back surfaces of the upper extending portion 62 to form an opening larger than the slits 68. Only one slit 66 is provided near the ridge 69.

Meanwhile, two slits 68 are provided. The slits 68 extend in an elongated manner along the lower ridge 78 and are arranged side by side in the front-rear direction along the lower ridge 78. A front end portion of the front slit 68 is located near the ridge 69. Each of the slits 68 penetrates front and back surfaces of the lower extending portion 64, and the size thereof is smaller than that of the slit 66.

Note that the sizes, shapes, and numbers of the slit 66 and the slit 68 can be arbitrary set.

An upper end portion of the upper arm portion 72 extends onto the side surface of the fuel tank 44, and an attachment portion for the bolt 40a is provided at a distal end of the upper end portion. A lower end portion of the lower arm portion 74 extends to a position near a lower end portion of the radiator 38, and an attachment portion for the bolt 40b is provided near the lower end portion. The bolt 40b is attached to the bracket 96 (see Fig. 6) provided on the outer side of the radiator 38.

The main body rear portion 54 integrally includes a horizontally-extending portion 80 which extends in the front-rear direction and in which an attachment portion for a bolt 40c (see Fig. 1) is provided in a rear end portion and a vertically-extending portion 82 which extends downward from a front end portion of the horizontally-extending portion 80. A front end portion 81 of the horizontally-extending portion 80 is inclined slightly and obliquely downward toward the front and is connected to a step portion 75 from a rear side, the step portion 75 formed by a rear end edge portion of the lower arm portion 74 curving forward in an upper portion thereof.

The position of a front end of the step portion 75 is at about the same height as the outermost portion 70 in the up-down direction, and the front end of the step portion 75 is connected to a lower end of a rear end edge portion of the upper arm portion 72. The step portion 75 is a ridge in a connection portion between the front end portion 81 of the horizontally-extending portion 80 and the lower arm portion 74.

An exhaust opening 84 is formed between the front end portion 81 of the horizontally-extending portion 80 and the rear end edge portion of the upper arm portion 72, and air above the radiator 38 can be exhausted outside from the exhaust opening 84 as shown by the arrow a.

The vertically-extending portion 82 is connected to a rear end edge portion of the lower arm portion 74 via the ridge 86, and extends downward toward a vicinity of the lower end portion of the lower arm portion 74. A rear edge portion of the vertically-extending portion 82 forms a space through which a space behind the radiator 38 is opened to the outside, together with a lower edge portion of the front end portion 81 of the horizontally-extending portion 80. Radiator exhaust air having passed through the radiator 38 inside the shroud 40 is exhausted rearward from this space as shown by the arrow b.

As shown in Fig. 4, although the shrouds 40 expand outward toward the front, the front end portions of the shrouds 40 are inclined inward such that an opening is made smaller by the extending portions 50, and each of the front-end portions 60 protrudes inward by a dimension A from the corresponding outermost portion 70.

Moreover, each of the shrouds 40 forms a flow-regulating curved surface (see Fig. 6) curved to protrude outward. The traveling wind WD flows along this flow-regulating curved surface to be changed to an inward flow, and is then guided by the fins 94.

As shown in Fig. 6, when a lateral width (lateral width in a front projection plane) of each of the radiator cores 38a is expressed as B, a gap C is formed between the radiator core 38a and the front end portion 60 of the corresponding extending portion 50. In other words, the front-end portion 60 is disposed outside the outer portion of the radiator core 38a away therefrom by C. Accordingly, a front end 50a of the extending portion 50 is not disposed in front of the radiator core 38a, and the extending portion 50 does not even partially cover the front of the radiator core 38a.

Note that the front end 50a has a terminal structure slightly bent inward. However, this terminal structure is provided to achieve excellent feeling of touch by not forming an edge in an end edge portion, and does not have a traveling wind guide function with a flow-regulating surface like the extending portion 50.

Moreover, since the extending portions 50 are bent inward and each of the front end portions 60 protrudes inward from the corresponding outermost portion 70 by the dimension A (Fig. 4), the extending portions 50 are not disposed in front of the radiator cores 38a.

Accordingly, as shown in Fig. 5, the area of each of the extending portions 50 in a front view is extremely small, and the extending portions 50 are located outside the radiator cores 38a with small protruding amounts toward the inner sides.

Furthermore, the length of the lower extending portion 64 of each extending portion 50 in the up-down direction is short, and the lower end of the lower extending portion 64 is at a substantially intermediate portion of the radiator 38 in the up-down direction. Accordingly, a lower portion of the lower extending portion 64 is continuous with the outside fin 94 with part of the lower arm portion 74 provided therebetween. A portion of the lower arm portion 74 other than that visible in Fig. 5 is hidden behind the outside fin 94. Accordingly, as shown in Figs. 2 and 3, part of the fin 94 is exposed below the extending portion 50 in the side view. This can make the extending portion 50 as small as possible.

Next, operations of the embodiment are described. In Figs. 4 and 6, the traveling wind WD passes outside the front forks 12 and the front fender 42 and is guided to the radiators 38 by the shrouds 40 to cool the radiators 38.

At this time, a line of flow of the traveling wind WD is bent outward by the front forks 12 and the front fender 42 near the front forks 12, upon passing outside the front forks 12. However, since the extending portions 50 are located lateral to the front forks 12 and the front fender 42, the traveling wind WD is directly guided by the extending portions 50 to be prevented from becoming turbulent and flows rearward in a regulated state. Hence, the traveling wind WD can be efficiently guided to the radiator cores 38a.

Moreover, since each of the extending portions 50 is inclined in an opposite direction to extend inward, the traveling wind WD whose line of flow is bent outward can be smoothly guided.

In this case, since each extending portion 50 extends obliquely inward and forward above and below the outermost portion 70 in the front end portion of the main body front portion 52, the extending portion 50 can guide the traveling wind entering the inside of the shrouds 40 rearward without the traveling wind escaping to the outside and achieve excellent cooling of the radiator.

Moreover, although the extending portions 50 extend inward, the extending portions 50 are provided outside the radiator cores 38a of the radiators 38 so as not to be disposed in front of the radiator cores 38a in the front view. Hence, the amount of the traveling wind WD directly flowing to the radiator cores 38a can be maximized. In addition, since the front of the radiator cores 38a is opened without being covered, it is possible to secure a wind guiding space as large as a wind receiving area in front of the radiator cores 38a and prevent reduction in the amount of wind to be taken in.

Furthermore, providing the extending portions 50 can increase the sizes of the guide surfaces for the legs F. In this case, increasing the areas of the guide surfaces of the shrouds 40 does not affect movement of the legs F. In addition, since the guide surfaces form inward-curved surfaces, the movement of the legs F is facilitated. Accordingly, it is possible to increase the sizes of the surfaces for guiding the legs of the rider by increasing the sizes of the shrouds 40 by the extending portions 50 and, at the same time, maximize the amount of the traveling wind flowing directly to the radiator cores 38a. Hence, the structure of the shrouds 40 having the extending portions 50 is suited for a motocross vehicle having a front portion in which the legs F are frequently guided.

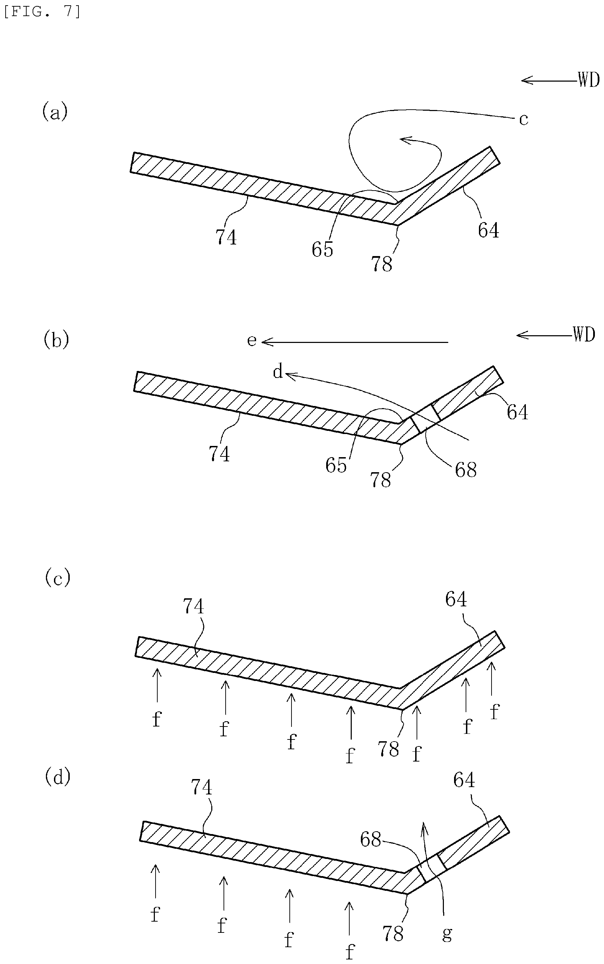

Moreover, providing the slit 66 and the slits 68 can increase the amount of guided wind in straight running and reduce crosswind resistance in cornering. This is described by using Fig. 7. Fig. 7 is a horizontal cross-sectional view schematically showing the extending portion 50. Parts (a) and (b) in the drawing show states in straight running and parts (c) and (d) show states in cornering. Moreover, the cross section is taken along the same portion as that of Fig. 6.

First, in straight running, when no slits are formed as shown in Part (a), since a bent recess portion 65 exists between the lower arm portion 74 (main body front portion 52) and the lower extending portion 64 near the lower ridge 78, the traveling wind WD may become turbulent as shown by the arrow c in the bent recess portion 65 upon entering the inside of the lower extending portion 64 (extending portion 50).

However, since the slits 68 are provided in the lower extending portion 64 in this application, as shown in part (b), part of the traveling wind WD enters the bent recess portion 65 from the outside of the lower extending portion 64 through the slits 68 as shown by the arrow d. The traveling wind WD entering the inside of the lower extending portion 64 as shown by the arrow e is thus rapidly pushed to flow rearward by the wind shown by the arrow d which has passed through the slits 68. Accordingly, the traveling wind WD is less likely to become turbulent. Hence, the slits 68 can prevent turbulence and contribute to an increase in the amount of guided wind.

Moreover, forming the slits 68 to have the elongated shape, aligning the longitudinal direction of the slits 68 with the lower ridge 78, and providing the slits 68 in an elongated manner in front of the lower ridge 78 can send the traveling wind WD from the slits 68 to the radiators 38 in straight running and also increase the opening area.

Next, description is given of a case in cornering. When the vehicle is banked in cornering without slits as shown in part (c), the shroud 40 receives a crosswind f from a side, and the crosswind resistance in leaning of the vehicle becomes relatively large, thereby hindering quick cornering. Meanwhile, as shown in part (d), in a case where the slits 68 exist, since part of the crosswind flows in through the slits 68 from the outside as shown by the arrow g, the crosswind resistance in leaning of the vehicle is reduced. Accordingly, it is possible to reduce the crosswind resistance in leaning of the vehicle and facilitate cornering even in a case where the size of the shroud 40 is increased.

Generally, there is a case where the rider puts his/her leg F forward along an outer surface of the shroud 40 to support the vehicle in running, and the shroud 40 is also a portion configured to guide the leg F. For the sake of this function, it is desirable to extend a front portion of the shroud 40 forward as much as possible and increase the size of the front portion of the shroud 40. However, when the size of the front portion of the shroud 40 is increased, the side area increases. Accordingly, the crosswind resistance becomes large when the vehicle is banked to be leaned in the cornering. For this reason, it has been impossible to achieve both of improvement in guiding of the leg F by extending the front portion of the shroud 40 forward and reduction of the crosswind resistance. However, the invention of the present application can achieve both.

Moreover, employing the elongated slits allows the leg F to smoothly pass near the slits 68.

Note that, although this description is about the lower extending portion 64 and the slits 68 in the extending portion 50, the same applies to the upper extending portion 62 and the slit 66.

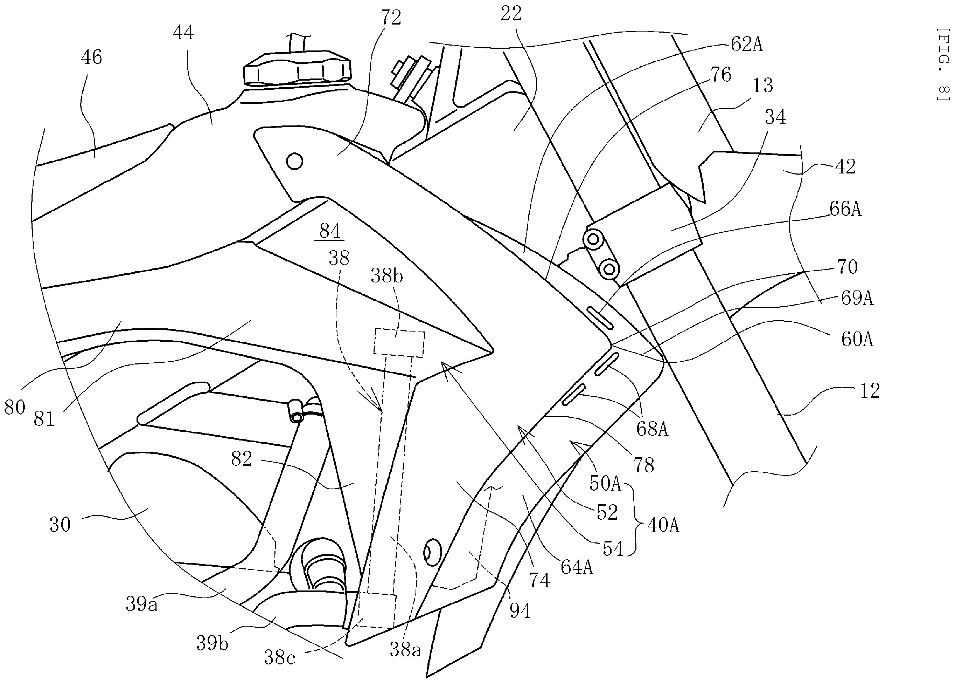

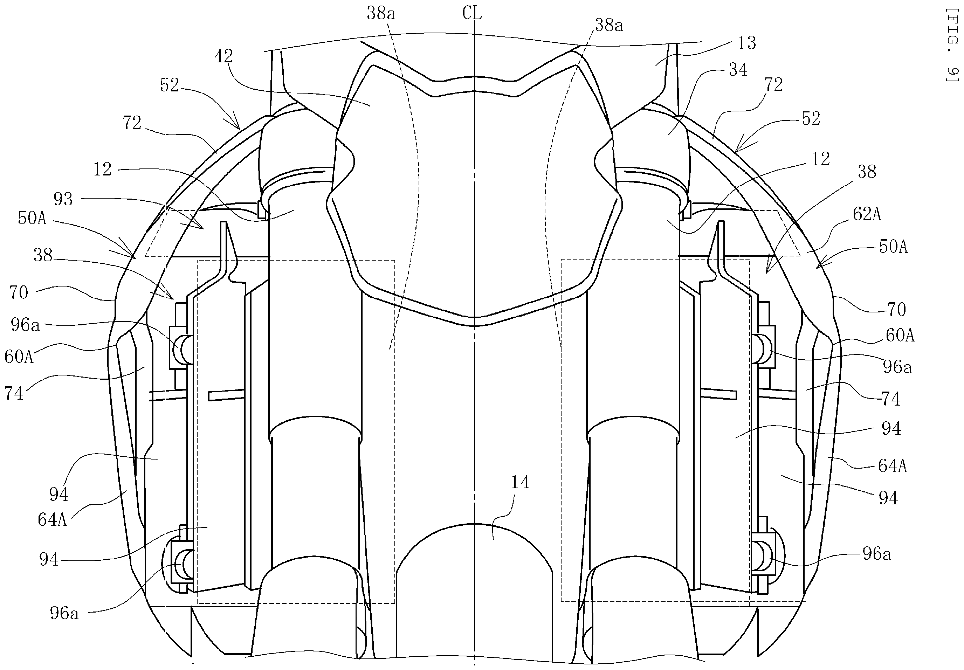

Next, another embodiment is described based on Figs. 8 and 9. Fig. 8 shows a portion corresponding to Fig. 2, and Fig. 9 is a front view corresponding to Fig. 5. Note that a shroud 40A of this embodiment is changed from the shroud 40 only in the shape of the extending portion. Accordingly, changed portions are denoted by adding reference symbol A to the same reference numerals as those of the corresponding portions in the aforementioned embodiment, and portions which are not changed are denoted by the same reference numerals as those of the corresponding portions in the aforementioned embodiment.

This embodiment is different from the aforementioned embodiment in the following points. In Figs. 8 and 9, a lower extending portion 64A in this embodiment is formed to be larger in size, and a lower end portion of the lower extending portion 64A is enlarged to extend to a portion near the lower end portion of the lower arm portion 74, thereby covering the fin 94 which is exposed below the lower extending portion 64 in Fig. 3 and the like. However, as shown in Fig. 9, this embodiment is no different from the aforementioned embodiment in that entire extending portions 50A including lower portions of the lower extending portions 64A are located outside the radiator cores 38a in the front view. Forming the lower extending portions 64A as described above can further increase the size of the extending portions 50A.
- 10: VEHICLE FRAME
- 12: FRONT FORK
- 38: RADIATOR
- 38a: RADIATOR CORE
- 40: SHROUD
- 42: FRONT FENDER
- 50: EXTENDING PORTION
- 52: MAIN BODY FRONT PORTION
- 54: MAIN BODY REAR PORTION
- 60: FRONT-END PORTION
- 62: UPPER EXTENDING PORTION
- 64: LOWER EXTENDING PORTION
- 66: SLIT
- 68: SLIT
- 70: OUTERMOST PORTION
- 72: UPPER ARM PORTION
- 74: LOWER ARM PORTION
- 76: UPPER RIDGE
- 78: LOWER RIDGE

## Claims

1. A saddle-ride type vehicle for motocross with a water-cooled engine (30) and a radiator shroud structure, the vehicle including: a pair of left and right front forks (12) by which a front wheel is steerably supported; a radiator (38) which is disposed behind the front forks (12); and a pair of left and right shrouds (40) which cover left and right outer sides of the radiator (38) from a front side to a rear side of the radiator (38), the front forks (12) being disposed between the pair of left and
right shrouds (40) in a vehicle width direction, wherein
a front end portion (60) of each of the shrouds (40) is disposed in front of an upper portion of the radiator (38) and an outermost portion (70) of each of the shrouds (40) is disposed in front of the radiator (38), and
each of the shrouds (40) includes:
a main body portion (52) which has the outermost portion (70) at a front end portion of the main body portion (52) ;
**characterized in**
**that** the structure of the shrouds (40) has an extending portion (50),
**that** the extending portion (50) extends from the front end portion of the main body portion (52) obliquely forward and inward toward rear ends of the front forks (12) in a side view, so as to increase the sizes of the shrouds (40),
**that** the extending portion (50) is provided in a range which is only an intermediate section of the front end portion of the main body front end portion (52) in the up-down direction, and
**that** the extending portion (50) is configured to guide a leg of a rider with its outer surface when the leg is put forward to support the vehicle and to regulate a traveling wind with its inner surface.

2. The saddle-ride type vehicle type according to claim 1, wherein
a boundary portion between the main body portion (52) and the extending portion (50) forms an upper ridge (76) extending upward and rearward from the outermost portion (70) and a lower ridge (78) extending downward and rearward from the outermost portion (70), and
the extending portion (50) extends forward from the upper ridge (76) and the lower ridge (78).

3. The saddle-ride type vehicle according to claim 2, wherein the extending portion (50) includes an upper extending portion (62) extending obliquely upward from the front end portion (60) toward the rear and a lower extending portion (64) extending obliquely downward from the front end portion (60) toward the rear, and the upper extending portion (62) forms an inclined surface which extends inward toward the upper side in the vehicle, and the lower extending portion (64) forms an inclined surface which extends inward toward the lower side in the vehicle, the upper extending portion (62) and the lower extending portion (64) being provided with a slit (66, 68) penetrating the extending portion (50) in the vehicle width direction.

4. The saddle-ride type vehicle according to claim 3, wherein the slit (66, 68) has an elongated shape and is disposed such that a longitudinal direction of the slit (66, 68) is aligned with the upper ridge (76) or the lower ridge (78).

5. The saddle-ride type vehicle according to any one of claims 2 to 4, wherein the extending portion (50) is disposed outside a radiator core (38a) of the radiator (38) in a front view.

## Patentansprüche

1. Fahrzeug vom Sattelfahrtyp für Motocross mit einem wassergekühlten Motor (30) und einer Kühlerverkleidungskonstruktion, wobei das Fahrzeug aufweist: ein Paar linker und rechter Vordergabeln (12), durch die ein Vorderrad lenkbar getragen wird; einen Kühler (38), der hinter den Vordergabeln (12) angeordnet ist; und ein Paar linker und rechter Verkleidungen (40), die linke und rechte äußere Seiten des Kühlers (38) von einer Vorderseite zu einer Rückseite des Kühlers (38) abdecken, wobei die Vordergabeln (12) zwischen dem Paar linker und rechter Verkleidungen (40) in einer Fahrzeugbreitenrichtung angeordnet sind, wobei
ein vorderer Endbereich (60) jeder Verkleidung (40) vor einem oberen Abschnitt des Kühlers (38) angeordnet ist und ein äußerster Bereich (70) jeder Verkleidung (40) vor dem Kühler (38) angeordnet ist, und
jede Verkleidung aufweist:
einen Hauptkörperbereich (52), der den äußersten Bereich (70) an einem vorderen Endbereich des Hauptkörperbereichs (52) hat;
**dadurch gekennzeichnet, dass**
die Konstruktion der Verkleidungen (40) einen Erstreckungsabschnitt (50) hat, dass der Erstreckungsabschnitt (50) sich von dem vorderen Endbereich des Hauptkörperbereichs (52) schräg nach vorne und innen zu einem hinteren Ende der Vordergabeln (12) in einer Seitenansicht erstreckt, umso die Größe der Verkleidungen (40) zu erhöhen,
dass der Erstreckungsabschnitt (50) in einem Bereich vorgesehen ist, der nur ein Zwischenbereich des vorderen Endbereich des vorderen Endbereich (52) des Hauptkörpers in der Oben-Unten-Richtung ist, und
dass der Erstreckungsabschnitt (50) eingerichtet ist, um ein Bein eines Fahrers mit seiner äußeren Seite zu führen, wenn das Bein nach vorne gebracht wird um das Fahrzeug zu stützen, und um Fahrtwind mit seiner inneren Fläche zu regulieren.

2. Fahrzeug vom Sattelfahrtyp gemäß Anspruch 1, wobei
ein Grenzbereich zwischen dem Hauptkörperabschnitt (52) und dem Erstreckungsabschnitt (50) einen oberen Kamm (76) bildet, der sich nach oben und hinten von dem äußersten Bereich (70) erstreckt und einen unteren Kamm (78), der sich nach unten und hinten von dem äußersten Bereich (70) erstreckt und
der Erstreckungsabschnitt (50) sich vor dem oberen Kamm (76) und dem unteren Kamm (78) erstreckt.

3. Fahrzeug vom Sattelfahrtyp gemäß Anspruch 2, wobei
der Erstreckungsabschnitt (50) einen oberen Erstreckungsbereich (62) aufweist, der sich schräg nach oben von dem vorderen Endbereich (60) nach hinten erstreckt und einen unteren Erstreckungsbereich (64), der sich schräg nach unten von dem vorderen Endbereich (60) nach hinten erstreckt und
der obere Erstreckungsbereich (62) eine geneigte Fläche bildet, die sich nach innen auf die obere Seite in dem Fahrzeug hin erstreckt und
der untere Erstreckungsbereich (64) eine geneigte Fläche bildet, die sich nach innen auf die untere Seite in dem Fahrzeug hin erstreckt,
wobei der obere Erstreckungsbereich (62) und der untere Erstreckungsbereich (64) mit einem Schlitz (66, 68) versehen ist, der den Erstreckung selbst mit (50) in der Fahrzeugbreitenrichtung durchdringt.

4. Fahrzeug vom Sattelfahrtyp gemäß Anspruch 3, wobei
der Schlitz (66, 68) eine längliche Form hat und so angeordnet ist, dass eine Längsrichtung des Schlitzes (66, 68) mit dem oberen Kamm (76) oder dem unteren Kamm (78) ausgerichtet ist.

5. Fahrzeug vom Sattelfahrtyp gemäß irgendeinem der Ansprüche 2 bis 4, wobei der Erstreckungsabschnitt (50) außerhalb des Kühlerkerns (38a) des Kühlers (38) in einer Vorderansicht angeordnet ist.

## Revendications

1. Véhicule de type à selle pour le motocross avec un moteur refroidi par l'eau (30) et une structure formant carénage de radiateur, le véhicule comprenant : deux fourches avant gauche et droite (12) par lesquelles est soutenue une roue avant de façon dirigeable ; un radiateur (38) qui est disposé derrière les fourches avant (12) ; et une paire de carénages gauche et droit (40) qui couvrent des côtés externes gauche et droit du radiateur (38) d'un côté avant à un côté arrière du radiateur (38), les fourches avant (12) étant disposées entre les deux carénages gauche et droit (40) dans un sens de largeur du véhicule, dans lequel une portion d'extrémité avant (60) de chacun des carénages (40) est disposée en face d'une portion supérieure du radiateur (38) et une portion périphérique (70) de chacun des carénages (40) est disposée en face du radiateur (38), et chacun des carénages (40) comprend : une portion de corps principal (52) qui a la portion périphérique (70) située à une portion d'extrémité avant de la portion de corps principal (52) ;
**caractérisé en ce que** la structure des carénages (40) a une portion d'extension (50), **en ce que** la portion d'extension (50) s'étend de la portion d'extrémité avant de la portion de corps principal (52) obliquement vers l'avant et vers l'intérieur vers des extrémités arrière des fourches avant (12) en vue latérale, de manière à accroître les dimensions des carénages (40), **en ce que** la portion d'extension (50) est prévue dans une zone qui est uniquement une section intermédiaire de la portion d'extrémité avant de la portion d'extrémité avant de corps principal (52) dans le sens haut-bas, **en ce que** la portion d'extension (50) est configurée pour guider une jambe du cycliste par sa surface externe lorsque la jambe est placée vers l'avant pour maintenir le véhicule et pour réguler un vent en mouvement par sa surface interne.

2. Véhicule de type à selle selon la revendication 1, dans lequel une portion limite située entre la portion de corps principal (52) et la portion d'extension (50) forme une nervure supérieure (76) s'étendant vers le haut et vers l'arrière depuis la portion périphérique (70) et une nervure inférieure (78) s'étendant vers le bas et vers l'arrière depuis la portion périphérique (70), et la portion d'extension (50) s'étend vers l'avant depuis la nervure supérieure (76) et la nervure inférieure (78).

3. Véhicule de type à selle selon la revendication 2, dans lequel la portion d'extension (50) comprend une portion d'extension supérieure (62) s'étendant obliquement vers le haut de la portion d'extrémité avant (60) vers l'arrière et une portion d'extension inférieure (64) s'étendant obliquement vers le bas de la portion d'extrémité avant (60) vers l'arrière, et la portion d'extension supérieure (62) forme une surface inclinée qui s'étend vers l'intérieur vers le côté supérieur du véhicule, et la portion d'extension inférieure (64) forme une surface inclinée qui s'étend vers l'intérieur vers le côté inférieur du véhicule, la portion d'extension supérieure (62) et la portion d'extension inférieure (64) étant dotées d'une fente(66, 68) pénétrant dans la portion d'extension (50) dans le sens de la largeur du véhicule.

4. Véhicule de type à selle selon la revendication 3, dans lequel la fente (66, 68) a une forme allongée et est disposée de telle sorte qu'un sens longitudinal de la fente (66, 68) est aligné sur la nervure supérieure (76) ou la nervure inférieure (78) .

5. Véhicule de type à selle selon l'une quelconque des revendications 2 à 4, dans lequel la portion d'extension (50) est disposée à l'extérieur d'une partie centrale de radiateur (38a) du radiateur (38) en vue de face.
